# FASCICULE DE BREVET EUROPEEN

(11) **EP 0 620 620 B1**
(45) Date de publication et mention de la délivrance du brevet: **09.07.1997**
(21) Numéro de dépôt: 93500044.8
(22) Date de dépôt: 15.04.1993
(51) Int. Cl.: H02B 1/06, H02G 3/14

(54) **Bâti de support multicombinable pour appareils électriques**
Vielfach kombinierbare Tragegehäuse für elektrische Geräte
Modular support housing for electric units

(43) Date de publication de la demande: 19.10.1994
(73) Titulaire: MATERIAL DE INSTALACION EUNEA, S.A., E-31100 Puente la Reina (Navarra) (ES)
(72) Inventeur: Miquel Marti, Salvador, E-08025 Barcelona (ES); Pla Jensen, Eduardo, E-08028 Barcelona (ES)
(74) Mandataire: Joly, Jean-Jacques

(56) Documents cités:
- DE-A- 1 690 425
- DE-A- 2 452 173
- DE-A- 2 926 078
- DE-A- 3 001 574
- DE-A- 3 129 061
- FR-A- 2 549 168
- US-A- 3 864 512

## Description

L'invention se rapporte à un "bâti de support multicombinable pour appareils électriques", et concerne plus concrètement un bâti métallique multicombinable les uns avec les autres pour composer des formats doubles, triples ou multiples pour différents appareils électriques, de préférence du petit matériel électrique, pour autant que soit maintenue une disposition ortho-réticulaire de ladite combinaison.

L'invention concerne un bâti de support métallique de nature rigide obtenu en alliage léger, par exemple du "zamak", par coulée sous pression en un seul et unique format qui est conçu et développé de manière simple pour être assemblé l'un à l'autre au moyen de dentures symétriques qui sont imbriquables complémentairement et alternativement, deux à deux, à fin d'assurer une multicombinaison dans un sens linéaire horizontal ou vertical, ou horizontal et vertical; en s'entrecroisant dans n'importe quelle projection ortho-réticulaire.

L'invention vise à proposer un bâti rigide permettant de pallier aux irrégularités superficielles du mur où sont encastrées les boîtes de raccordement, en offrant la possibilité d'être associé à d'autres bâtis identiques complémentaires grâce à un assemblage dont la conception est la solution pour assurer cette possibilité d'une manière simple et sûre, afin que l'ouvrier n'ait pas à avoir recours à des solutions alternatives d'accouplement, de centrage, d'emplacement et de mise face à face des moyens de fixation, voire à des trucages ou à des artifices de fixation pour dissimuler des faux montages qui sont difficiles à résoudre à l'aide des bâtis ou supports en usage.

Le bâti-support métallique pour appareils ou mécanismes électriques que propose l'invention est conçu intérieurement, de préférence, pour les mécanismes modulaires que propose le Brevet Nº 545.782 en Espagne "UN SYSTEME MODULAIRE UNIQUE POUR LA FABRICATION DE PETIT MATERIEL ELECTRIQUE", no 3620416 en Allemagne; no 8607861 en France; nº 1197778 en Italie; nº 83108 au Portugal; de la demanderesse répond plus concrètement à la version donnée dans le Modèle d'Utilité no 293035/8 pour un "CADRE-BATI POUR MODULES INVARIABLES PORTE-MECANISMES" en Espagne, dont est également titulaire la demanderesse, de sorte que la solution que propose l'invention concerne principalement les caractéristiques externes du bâti-support que lui confèrent les moyens indiqués dans les paragraphes de l'exposé qui précède.

Une solution latérale d'assemblage de supports pour appareils électriques est offerte par le Brevet Français nº 90.09452 de LEGRAND-FR. pour un "SUPPORT POUR APPAREIL ELECTRIQUE". Bien que dans ce dernier, principalement dans le résumé, il s'agit en essence d'une rainure brisée pcur le montage du support sur la boîte. En faisant allusion de manière réitérée dans le texte descriptif et dans la revendication 10, à des languettes latérales (22) saillantes, en surplomb et alternativement échelonnées dans le bâti (13), dans des positions inverses desdites languettes (22) dotées, respectivement, de tétons (24) et d'un évidage borgne (25) qui sont supposés être respectivement et inversement encastrables dans des encastrements (23) disposés inversement.

Ce support (13) est un bâti métallique laminaire estampé, doté d'une certaine élasticité pour pouvoir assurer l'encastrement entre supports. La disposition n'admet pas plus d'une association linéaire, dans un seul sens des supports. La nature laminaire du support prive le bâti d'une certaine rigidité dont il a besoin, par ailleurs, pour l'encastrement. Cette version exige un format atypique de support rendant obligatoire la disposition des rainures latérales pour le montage, objet principal dudit Brevet.

L'association entre supports requiert une mise face à face très précise du fait de la petitesse des languettes (22) et, plus encore, des moyens d'encastrement (24) (25), ce qui fait qu'une légère altération de la surface, de l'alignement ou de la position des boîtes entraîne un désajustement net de ceux-ci et rend difficile, voire impossible, leur accouplement.

Les limitations de l'épaisseur (laminaire) du support font obligatoirement que les moyens d'encastrement (24-25) pénètrent à peine les uns dans les autres. A toutes fins utiles, l'encastrement s'avère fragile et toute pression, toute excentricité ou toute cause analogue provoquera à n'en pas douter son désajustement.

En référence au brevet FR-A-2549168 mentionné dans le rapport de recherche, sa revendication 1 définit un alignement de crochets (8, 9), alternativement placés de part et d'autre d'un plan médian, qui est parallèle au plan de la saillie périphérique considérée envers lequel les ouvertures (11, 12) de ces crochets sont orientées, de manière à former une charnière avec les crochets complémentaires.

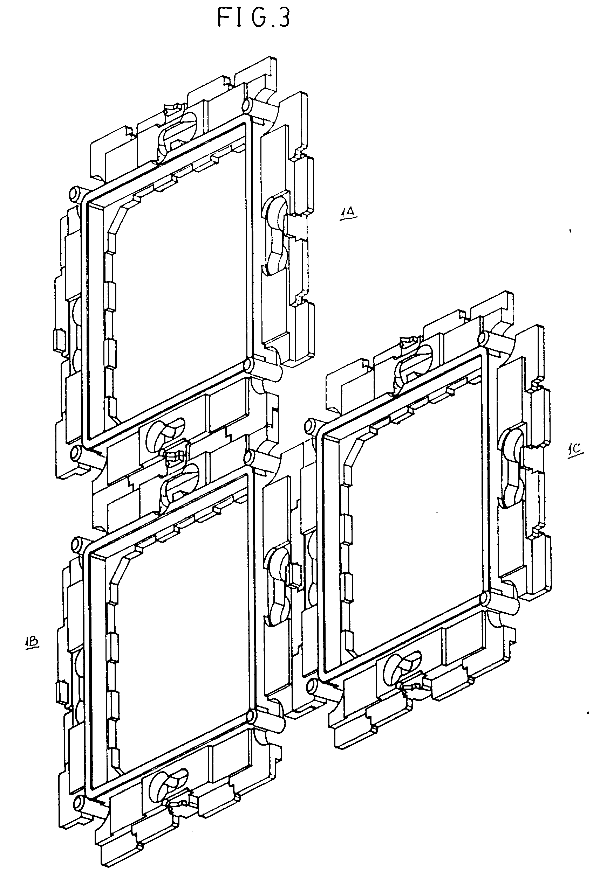

Il découle du brevet FR-A-2545168 que:
a): Les éléments d'ancrages disposés aux bords des pièces ne sont pas communs à toutes les pièces (figure 3).
b): Ces éléments d'ancrage ont une disposition monolinéaire en une position intermédiaire par rapport aux bords de la plaque;
c): Lesdits éléments d'ancrage ont des configurations très spécifiques pour accrochage des plaques entre elles par reguidage horizontal;
d): De tels éléments d'accrochage, lors de l'assemblage, montrent une plaque en forme de "queue d'aronde";
e): Lesdits moyens d'accrochage sont disposés en relation adjacente avec les coins de la plaque; coupés pour faciliter l'entrée pour assemblage horizontal des plaques entre elles.

Le brevet allemand DE-A-2926078 concerne également des moyens d'assemblage entre le châssis ayant également une forme en queue d'aronde qui:
a): sont situés de manière alternative et répétée sur chaque bord;
b): sont développés dans le même plan que le châssis avec le même procédé que celui-ci, c.à.d., ils sont frappés sur la plaque elle-même;
c): L'entourage de la plaque est en alternance formé par les saillants des parties mâles de l'ancrage, le bord étant, par conséquent, irrégulier.

L'invention vise principalement à proposer une solution pratique et simple pour les bâtis-supports des appareils électriques qui peuvent être assemblés, par l'un quelconque de leurs quatre côtés, grâce à un système d'imbrications réciproques et alternatives inversées, deux à deux, qui en assure le raccordement, l'alignement et la symétrie, en supportant des contraintes, tant élastiques que de traction, importantes du fait des irrégularités superficielles, du désalignement des boîtes, des ancrages, des attaches, etc., en proposant d'une part un bâti rigide associé, d'autre part, à la susdite solution d'assemblage.

L'invention concerne un bâti de support multicombinable pour appareils électriques présentant les caractéristiques énoncées dans la revendication 1.

L'invention vise à fournir un bâti-support métallique rigide dont l'assemblage assure à tout moment la symétrie et l'homogénéité, tant configurative que dimensionnelle, pour, d'une part, être accouplé et fixé aux boîtes de raccordement encastrées et, d'autre part, pour recevoir le cadre embellisseur simple, double, triple, quadruple, etc, soit en combinaison linéaire horizontale ou verticale, soit en combinaison horizontale et verticale ortho-réticulaire, en assurant l'écartement interstitiel pour les cadres embellisseurs.

L'invention propose également un "UNIQUE" bâti-support métallique rigide, obtenu par coulée sous pression d'un alliage léger tel que du "zamak", doté de moyens périphériques externes symétriques qui, une fois assemblés, répondent à la combinaison par répétition successive exposée au paragraphe précédent.

Une idée tout aussi essentielle de l'invention est de proposer des moyens d'assemblage pour l'association ccmbinée du support unique précité qui permet, en plus, d'en assurer l'imbrication, de les assembler même une fois le précédent monté grâce à la possibilité d'assemblage par approche latérale des moyens d'assemblage.

L'invention se propose de déterminer que l'assemblage soit assuré tant dans le sens linéaire-transversal que dans le sens horizontal et dans le sens vertical.

De même, une idée complémentaire de l'invention est de disposer de moyens simples mais stratégiques d'emboîtage à force pour les cadres embellisseurs, notamment des appuis équidistants servant de guide des touches ou boutons-poussoirs sur les mécanismes les comportant: interrupteurs, commutateurs, sonneries, etc. et/ou, naturellement de moyens tels que rainures mixtes ccmmunes, guides ou combinaisons des deux pour le passage des moyens de fixation du bâti aux boîtes de raccordement encastrées.

Selon une caractéristique de l'invention, il s'agit en essence d'un bâti "unique" au format quadrangulaire symétrique, à structure rigide en matériaux métalliques, notamment un alliage léger: du "zamak", moulée par coulée sous pression, le bâti étant délimité périmétralement par quatre côtés réguliers et égaux, qui sont coupés en leurs angles adjacents respectifs et dont les bords externes sont dotés essentiellement de moyens d'imbrication et d'assemblage. Une autre caractéristique de l'invention est que les moyens externes d'assemblage sont égaux et complémentaires les uns par rapport aux autres -dans le sens des aiguilles d'une montre- tandis que les moyens qui se font face diamétralement sont inversement opposés, deux à deux. Cet agencement permet, en faisant tourner le bâti objet de l'invention de 90º, de mettre le cadre dans la position d'assemblage appropriée par rapport à un autre bâti monté auparavant et, en garantissant la symétrie de l'ensemble, d'homogénéiser la répétition desdits bâtis dans la quantité d'alignement requise, soit horizontale ou verticale, soit horizontale et verticale entrecroisée dans n'importe quelle version ortho-réticulaire requise.

Une autre caractéristique des moyens externes d'assemblage de l'invention est qu'ils sont disposés centralement pour assurer l'imbrication dans le sens latéral suivant des coordonnées -horizontale et verticale- et aux extrémités, pour assurer l'imbrication dans le sens vertical, en dessus et en dessous, inversement. Ces moyens sont divisés à ces fins en quatre espaces de même dimension, ce qui donne pour résultat huit points d'assemblage, deux en haut, deux en bas et quatre latéraux (deux en haut et deux en bas).

Une autre caractéristique est que lesdits moyens externes d'assemblage ont une section verticale équivalente à la moitié de l'épaisseur du côté du bâti et comportent deux dents centrales, à mi-épaisseur, et deux dents externes à mi-épaisseur, inverses, l'une avec l'espace en dessus et l'autre en dessous. Cette disposition ou agencement permet l'accouplement de bâtis à d'autres par simple approche latérale, même si le précédent se trouve monté, mi-monté ou non monté.

Une autre caractéristique de l'invention est que la confluence des côtes symétriques du bâti est dépourvue d'angles saillants et présente des angles rentrants analogues (concaves) qui facilitent l'accouplement dans chaque assemblage, même si l'approche des bords à assembler ne se dirige pas unidirectionnellement ou de face, cette approche pouvant être faite de manière excentrique ou latéralement au cas où un obstacle ou une cause quelconque s'opposerait à la première approche.

Une autre caractéristique de l'invention est que les côtes symétriques du bâti ont un plan superficiel présentant, tangentiellement aux sommets concaves de chaque coin du bâti et adossés aux arêtes du rebord concentrique du cadre pour les appareils ou mécanismes électriques, des moyens spéciaux de fixation du cadre embellisseur, plus concrètement des tétons cylindriques coniformes à conicité inversée et pourvus d'une entaille très mince de verrcuillage dans une zone proche de la tête.

Une autre caractéristique de l'invention est que les côtes symétriques du bâti ont un plan superficiel qui contient principalement des saillies (quatre saillies) qui émergent verticalement du chant desdits côtés, dans une disposition régulière et concrète, et qui sont des points de pivotement, de centrage et de butée pour les touches (boutons-poussoirs) des mécanismes.

Une autre caractéristique de l'invention, selon une variante de réalisation, propose des moyens d'assemblage latéral, également symétriques et respectivement inversés suivant leurs côtés se faisant face réciproquement, selon un agencement d'éléments bouvetés d'assemblage vertical, de préférence, pourvu de deux éléments sur chaque côté mâle et femelle, respectivement, au profil ou section en "queue d'aronde" et, de préférence, avec des ajustements latéraux à facettes ou biseautés.

Les caractéristiques essentielles de l'invention apparaîtront plus clairement à l'aide de la description qui va suivre, faite en référence aux planches de dessins ci-annexées et où sont représentés, de manière quelque peu schématique et uniquement à titre d'exemple, les détails préférés de l'invention.

Sur les dessins:

La figure 1 est une vue en perspective d'un bâti modulaire selon l'invention.

La figure 2 est une vue en perspective d'un jeu de bâtis modulaires, selon l'invention, en projection d'assemblage.

La figure 3 est une vue en plan d'un jeu de bâtis en position d'assemblage dans deux sens, vertical et horizontal.

La figure 4 est une vue en perspective d'un bâti modulaire, selon une variante de réalisation de la figure 1, de l'ensemble de la figure précédente une fois celui-ci monté.

La figure 5 est une vue analogue à la précédente, selon une variante du format de montage du précédent.

La figure 6 est une vue analogue à la précédente, suivant une variante du format pour un élément électrique.

La figure 7 est une vue analogue à la précédente suivant une variante du format pour prises de courant.

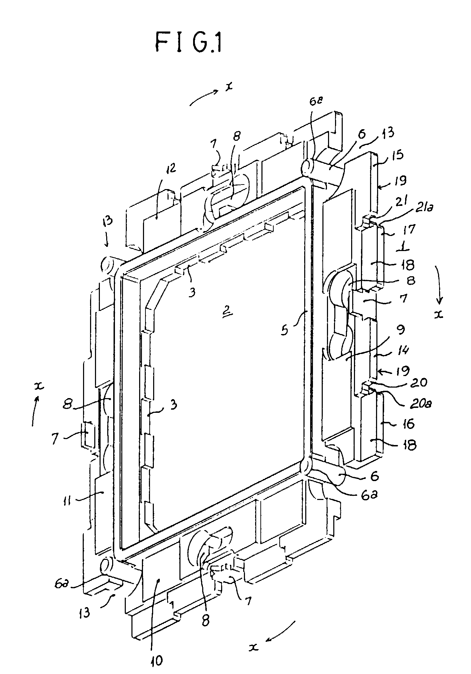

En référence aux illustrations précédentes et, de préférence, à la représentation de la figure 1, le bâti modulaire rigide et métallique est une pièce (1) au format quadrangulaire régulier dont tous les côtes (9) (10) (11) et (12) sont symétriques et égaux les uns par rapport aux autres, avec un creux ou évidement concentrique (2) doté intérieurement de moyens (3) pour le montage des blocs porte-mécanismes, entouré par un rebord élevé (5) représentant, sur cette représentation, des tétons cylindriques (6), proches et tangents à ses arêtes, qui font fonction d'ancrages mâles pour la fixation des cadres embellisseurs (non représentés).

Ce sont des ancrages mâles (6) cylindriques à projection coniforme inversée (la plus grande base en haut) présentant une encoche ou entaille très fine (6a) pour le verrouillage des moyens d'ancrage des cadres embellisseurs complémentaires.

Le plan superficiel desdits côtés (9) (10) (11) et (12) montre les rainures mixtes (8) pour les moyens de fixation du bâti (1) sur la boîte de raccordement (non représentée) et, tout spécialement, des chants desdits bords ou côtés (9) (10) (11) (12) émergent des saillies ou épaulements verticaux (7) au profil étoilé irrégulier, quatre saillies (7) en disposition régulière en croisillon qui font fonction de point de pivotement, de centrage et d'appui des touches ou boutons-poussoirs (non représentés) des mécanismes électriques.

Les bords externes des côtés symétriques (9) (10) (11) et (12) du bâti (1) sont en essence principalement munis des moyens d'assemblage objet de l'invention. Ceux-ci sont des éléments saillants et rentrants symétriques alternatifs égaux les uns par rapport aux autres, dans le sens des aiguilles d'un montre, marqués cu repérés par les flèches (X) mais inversés, deux à deux, suivant les côtés diamétralement opposés (9-11) et (10-12).

Les moyens d'assemblage, situés à différents niveaux, en haut (14-15) et en bas (16-17), sont composés d'une section verticale équivalent à la moitié de l'épaisseur du côté symétrique respectif (9) (10) (11) ou (12) du bâti (1). Les saillies inférieures (16-17) sont des encastrements échelonnés à mi-épaisseur dont l'espace (18) est en haut, tandis que les saillies supérieures (14-15) ont l'espace (19) en bas.

Les moyens d'assemblage (14-15) (16-17) sont seulement séparés par les saillies de pivotement (7). Les moyens d'assemblage saillants (14-15) (16-17) ont les mêmes dimensions, aussi bien en long qu'en large (fond) et la même épaisseur, avec seulement les tolérances mécaniques propres à tout ajustement pour que l'assemblage se réalise convenablement.

Toutefois, les moyens saillants supérieurs (14-15) présentent latéralement des parties rentrantes ou encoches d'encastrement (20) et (21) respectivement, pour une meilleure imbrication des empiétements réciproques entre bâtis, les moyens saillants inférieurs (16-17) ayant des parties rentrantes ou encastrements angulaires (20a) (21a) aux même fins que les précédentes.

De la sorte, l'imbrication de l'assemblage entre les moyens saillants supérieurs (14-15) et les encastrements latéraux (20-21) et les moyens saillants inférieurs (16-17) et les encastrements latéraux (20a-21a) assurent l'assemblage dans le sens latéral des bâtis (1) et l'imbrication entre les espaces (18-19) des moyens saillants (14 et 15) (16 et 17) respectivement, assurent l'assemblage dans le sens vertical en immobilisant la joncticn des bâtis (1) calculée en fonction des caractéristiques rigides de la pièce.

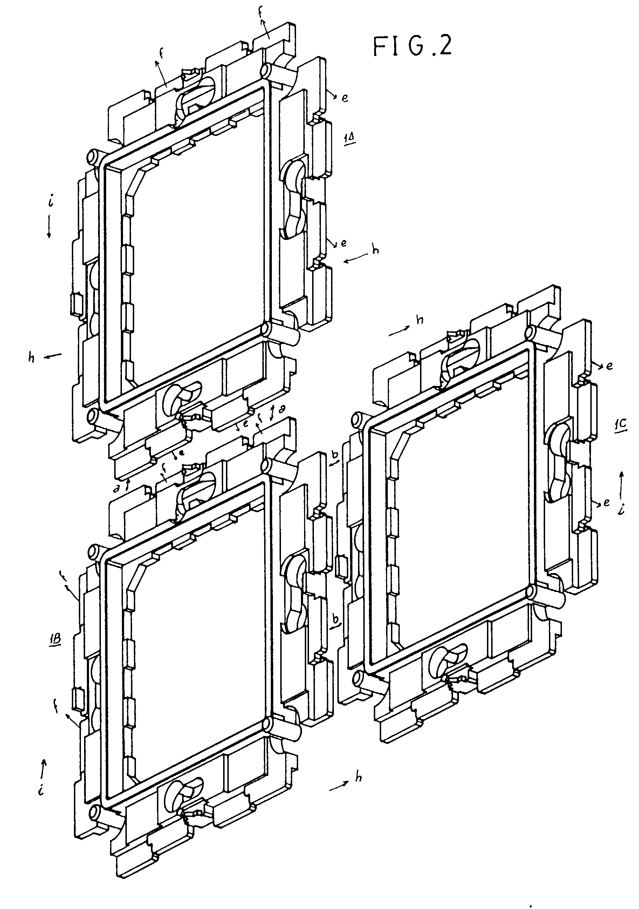

Un exemple dudit assemblage de trois bâtis (1A) (1B) et (1C) dans deux sens est montré sur la figure 2. Les flèches (a-a) et (b-b) montrent l'approche frontale des bâtis (1A) (1B) et (1C) tandis que les flèches (e) et (f) montrent l'emboîtage ou ajustement vertical de l'assemblage, et les flèches (h) et (i) définissent le travail dans le sens latéral -horizontal et vertical- de l'assemblage.

La figure 3 montre une vue en plan en perspective de l'assemblage des bâtis (1A) (1B) et (1C).

L'approche desdits bâtis (1A) (1B) et leur accouplement sont facilités par l'absence d'angles saillants des bâtis comportant des échancrures à angles rentrants ou concaves (13) qui permettent de réaliser l'assemblage dans des positions excentriques ou obliques au cas où il y aurait un inconvénient ou un obstacle quelconque empêchant leur mise face à face.

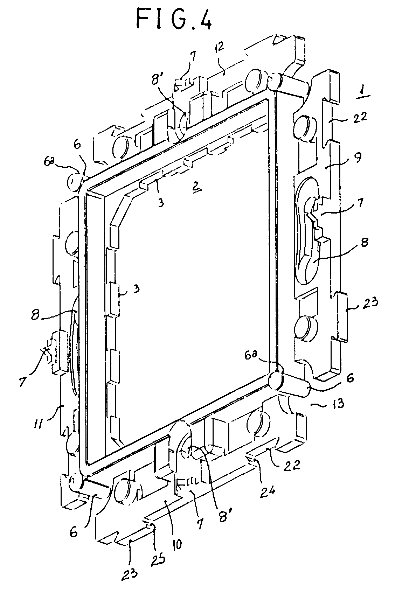

Selon l'exemple représenté sur les figures 4 et suivantes, dans une variante de réalisation on a doté le système latéral d'assemblages réciproques de moyens d'emboîtements verticaux comportant sur chaque côté (9-10-11 et 12) au moins un moyen femelle (22) et un moyen mâle (23), alternés et opposés deux à deux, dans une dispositicn analogue au cas exposé sur la figure 1, de préférence en "queue d'aronde" ou autres formes pour un ancrage opposé à même d'assurer l'assemblage et l'impossibilité de séparation ou d'écartement latéral ou linéaire.

De manière supplémentaire, les côtés des moyens d'assemblage (22) et (23) ont des facettes ou biseautages (24) (25) respectivement, pour assurer la précision des emboîtages réciproques et faciliter le raccordement dans le montage vertical mentionné.

La figure 4 montre en outre un bâti à accouplements mixtes à la boîte de raccordement encastrée. Il comporte sur deux côtés des rainures oblongues (8), pour un montage traditionnel, et d'autres rainures latérales avec des trous de passage (8'), pour un montage à l'aide de boulons internes.

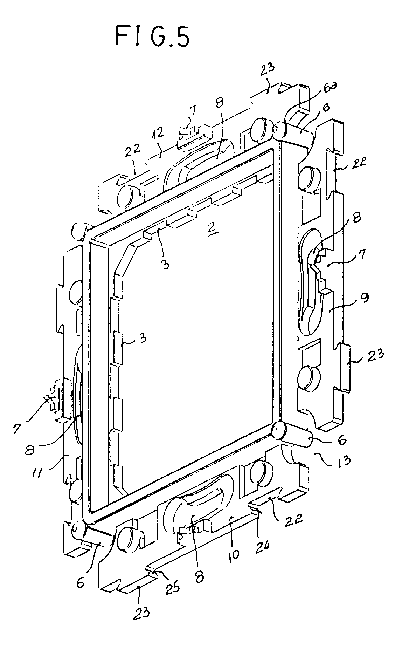

La figure 5, est un format de bâti du type et aux caractéristiques d'assemblage du précédent, mais avec des moyens latéraux d'accouplement (8) à rainure traditionnelle sur tous ses côtés.

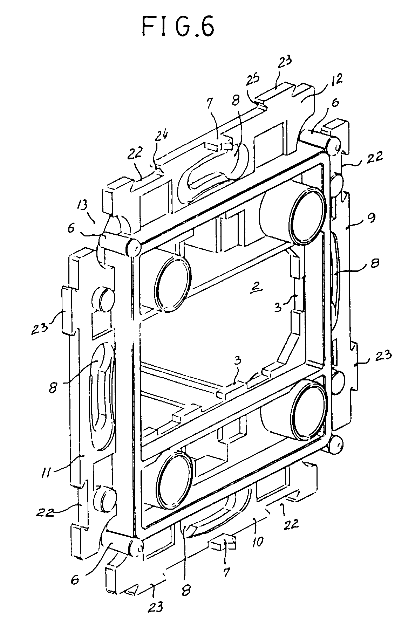

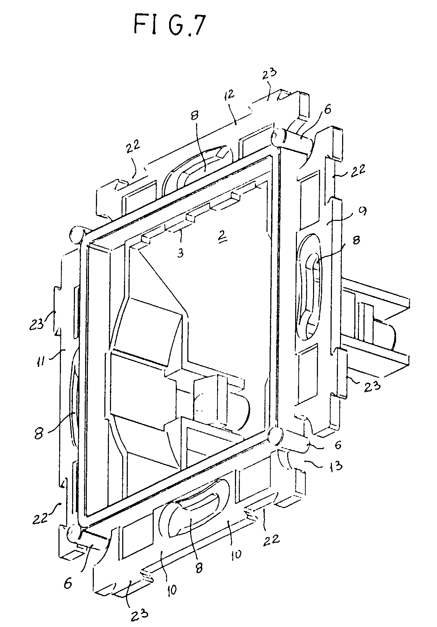

La figure 6 nous montre un format de bâti, selon la solution de la figure 4, pour un seul élément ou bloc de mécanisme électrique, la figure 7 représentant une solution pour prises de courant.

N'importe laquelle de ces solutions qui serait requise pour l'installation des mécanismes électriques, peut être adoptée, évidemment, avec le bâti de la figure 1 qui correspond à l'objet principal et essentiel de l'invention.

## Revendications

1. BÂTI DE SUPPORT MULTICOMBINABLE POUR APPAREILS ELECTRIQUES, constitué par un bâti modulaire (1) unique comportant un cadre (2) pour le montage de mécanismes électriques, des moyens complémentaires pour la fixation (8), l'accouplement (3) et le centrage (17) des boutons-poussoirs ou touches de commande et la fixation (6-6a) des cadres embellisseurs, selon une pièce composée d'un bâti rigide (1) quadrangulaire-régulier délimité par quatre côtés symétriques (9, 10, 11, 12) dépourvus de confluences et angles saillants (13), caractérisé en ce que les côtés (9, 10, 11, 12) sont dotés de moyens d'assemblage échelonnés (14, 15-16, 17) imbriquables (10-20a-21-21a) égaux entre eux, dans le sens des aiguilles d'une montre et complémentaires deux à deux, selon les côtés se faisant face (9, 11 et 10, 12) du bâti (1) et composés d'une section verticale équivalente à la moitié de l'épaisseur du côté symétrique respectif.

2. BÂTI DE SUPPORT MULTICOMBINABLE POUR APPAREILS ELECTRIQUES, selon la revendication précédente, caractérisé en ce que les moyens d'assemblage sont constitués par des moyens saillants centraux et extrêmes alternatifs, en haut (14-15) et en bas (16-17), séparés uniquement par une saillie (7) intermédiaire d'appui, et en ce que le moyen saillant central d'en haut (14) et celui d'en bas (16) ont une partie rentrante ou encastrement angulaire (20) (21a) et les moyens saillants extrêmes d'en haut (15) et d'en bas (16) ont une partie rentrante ou encastrement angulaire (21) (20a) du côté intérieur.

3. BÂTI DE SUPPORT MULTICOMBINABLE POUR APPAREILS ELECTRIQUES, selon la revendication 2, caractérisé en ce que les moyens saillants d'assemblage (14-15) (16-17) sont des saillies échelonnées alternativement (14-15) avec un espace d'encastrement (19) en haut et d'autres saillies échelonnées (16-17) avec un espace d'encastrement en bas (18).

4. BÂTI DE SUPPORT MULTICOMBINABLE POUR APPAREILS ELECTRIQUES, qui comporte des moyens d'assemblage, selon les revendications 2 et 3, caractérisé en ce que les moyens saillants supérieurs (14-15), les moyens saillants inférieurs (16-17) et, les espaces (18-19) ont tous les mêmes dimensions, aussi bien en long qu'en large, profondeur, exception faite des tolérances d'ajustement.

5. BÂTI DE SUPPORT MULTICOMBINABLE POUR APPAREILS ELECTRIQUES, qui comporte des moyens supérieurs saillants (14-15) et des moyens saillants inférieurs échelonnés (16-17), selon l'une quelconque des revendications 2 à 4, caractérisé en ce que la section verticale de ceux-ci est d'une épaisseur exacte sur tous les côtés (9) (10) (11) et (12) du bâti rigide (1).

6. BÂTI DE SUPPORT MULTICOMBINABLE POUR APPAREILS ELECTRIQUES, qui comporte des moyens d'assemblage alternatif, selon l'une quelconque des revendications 1 à 5, caractérisé en ce qu'il comporte des moyens d'emboîtement (22) et (23) en forme de "queue d'aronde", respectivement emboîtables en projection verticale et, en option, dotés sur chaque côté de chanfreins ou biseaux (24-25) d'encastrement.

7. BÂTI DE SUPPORT MULTICOMBINABLE POUR APPAREILS ELECTRIQUES, consistant en un bâti (1) dépourvu d'angles saillants, selon la revendication 1, caractérisé en ce que les coins sont des angles rentrants concaves (13).

8. BÂTI DE SUPPORT MULTICOMBINABLE POUR APPAREILS ELECTRIQUES, comportant de manière complémentaire des moyens d'appui et de centrage (7) des touches ou boutons-poussoirs, selon la revendication 1, caractérisé en ce que ce sont des saillies polygonales irrégulières émergeant perpendiculairement au bord de chaque côté du bâti (9 à 12), disposées symétriquement, en croisillon.

9. BÂTI DE SUPPORT MULTICOMBINABLE POUR APPAREILS ELECTRIQUES, qui comporte des moyens de fixation (6) des cadres embellisseurs, selon la revendication 1, caractérisé en ce que les moyens de fixation (6) sont constitués par des tétons cylindriques coniformes à projection inversée, adossés et tangents aux arêtes du rebord concentrique (5) du cadre (2) porte-mécanisme électrique, et présentant une encoche ou entaille périphérique (6a) à proximité de la base supérieure du téton (6).

## Patentansprüche

1. Vielfach kombinierbares Traggehäuse für elektrische Geräte, bestehend aus einem einzigen modularen Gehäuse (1) mit einer mittleren Ausnehmung (2) zur Montage elektrischen Vorrichtungen, zusätzlichen Mitteln zur Befestigung (8), Kupplung (3) und Zentrierung (17) der Bedienungsdruckknöpfe oder -tasten und zur Befestigung (6-6a) der Zierrahmen, gemäß eines Teils bestehend aus einem starren, durch vier symmetrische Seiten (9, 10, 11, 12) ohne Vereinigungen oder vorspringenden Ecken (13) begrenzten, regelmäßigen viereckigen Gehäuse (1), dadurch gekennzeichnet, daß die äußeren Ränder (9, 10, 11, 12) abgestufte Montagemittel (14, 15-16, 17) aufweisen, die verzahnbar (10-20a-21-21a), untereinander identisch, im Uhrzeigersinn und paarweise komplementär sind, gemäß der gegenüberliegenden Seiten (9, 11 und 10, 12) des Gehäuses (1), und die aus einem senkrechten, der Hälfte der Dicke der jeweiligen symmetrischen Seite entsprechenden Abschnitt bestehen.

2. Vielfach kombinierbares Traggehäuse für elektrische Geräte, gemäß vorhergehendem Anspruch, dadurch gekennzeichnet, daß die Montagemittel aus oberen (14-15) und unteren (16-17) abwechselden mittleren und extremen vorspringenden Mitteln bestehen, die nur durch einen mittleren Stützvorsprung (7) getrennt sind, und daß das obere mittlere vorspringende Mittel (14) und das untere mittlere vorspringende Mittel (17) einen einspringenden Teil oder eckigen Einfügungsteil (21) (21a) und das obere extreme vorspringende Mittel (15) und das untere extreme vorspringende Mittel (16) einen einspringenden Teil oder eckigen Einfügungsteil (21) (21a) auf der inneren Seite aufweisen.

3. Vielfach kombinierbares Traggehäuse für elektrische Geräte, gemäß Anspruch 2, dadurch gekennzeichnet, daß die vorspringenden Montagemittel (14-15) (16-17) abwechselnd abgestufte Vorsprünge (14-15) mit einem oberen Einfügungsraum (18) und andere abgestufte Vorsprünge (16-17) mit einem unteren Einfügungsraum (19) sind.

4. Vielfach kombinierbares Traggehäuse für elektrische Geräte, mit Montagemitteln, gemäß Ansprüchen 2 und 3, dadurch gekennzeichnet, daß sämtliche obere vorspringende Mittel (14-15), untere vorspringende Mittel (16-17) und Räume (18- 19) auf der Länge, der Breite und der Tiefe die gleichen Maße aufweisen, mit Ausnahme der Paßtoleranzen.

5. Vielfach kombinierbares Traggehäuse für elektrische Geräte, mit oberen vorspringenden Mitteln (14-15) und unteren abgestuften vorspringenden Mitteln (16-17), gemäß irgendeinem der Ansprüche 2 bis 4, dadurch gekennzeichnet, daß der senkrechte Abschnitt dieser Mittel auf sämtlichen Seiten (9), (10), (11) und (12) des starren Gehäuses (1) eine genaue Dicke aufweist.

6. Vielfach kombinierbares Traggehäuse für elektrische Geräte, mit abwechselnden Montagemitteln, gemäß irgendeinem der Ansprüche 1 bis 5, dadurch gekennzeichnet, daß es «schwalbenschwanzförmige» Einfügungsmittel (22) und (23) aufweist, die jeweils in senkrechter Projektion einfügbar sind und, gegebenenfalls, auf jede Seite mit Einfügungsfasen oder -schrägflächen (24-25) ausgerüstet sind.

7. Vielfach kombinierbares Traggehäuse für elektrische Geräte, bestehend aus einem Gehäuse (1) ohne vorspringende Ecken, gemäß Anspruch 1, dadurch gekennzeichnet, daß die Ecken konkave einspringende Ecken (13) sind.

8. Vielfach kombinierbares Traggehäuse für elektrische Geräte, aufweisend zusätzlich Stütz- und Zentrierungsmittel (7) der Tasten oder Druckknöpfe, gemäß Anspruch 1, dadurch gekennzeichnet, daß diese unregelmäßige polygonale Vorsprünge sind, die senkrecht zum Rand jeder Seite des Gehäuses (9 bis 12) ausragen und symmetrisch, kreuzförmig angeordnet sind.

9. Vielfach kombinierbares Traggehäuse für elektrische Geräte, aufweisend Befestigungsmittel (6) der Zierrahmen, gemäß Anspruch 1, dadurch gekennzeichnet, daß diese Befestigungsmittel (6) aus zylindrischen kegelförmigen Ansätzen mit umgekehrter Projektion bestehen, die an den Kanten des konzentrischen Randes (5) des elektrische Vorrichtungen tragenden Rahmens (2) anliegen und tangieren und die eine Umfangskerbe oder -vertiefung (6a) in der Nähe der oberen Grundfläche des Ansatzes (6) aufweisen.

## Claims

1. Multicombinable support frame for electrical apparatus, constituted by a single modular frame (1) comprising a frame (2) for assembling electrical mechanisms, complementary means for fixing (8), coupling (3) and centering (17) control push buttons or keys and fixing (6-6a) decorative frames, in the form of a piece composed of a rigid, regular quadrangular frame (1) defined by four symmetrical sides (9, 10, 11, 12) bereft of junctions and projecting angles (13), characterized in that the sides (9, 10, 11, 12) are provided with stepped assembly means (14, 15-16, 17) adapted to be imbricated (10-20a-21-21a) equal to one another, in clockwise direction and comple-mentary in two's, along the opposite sides (9, 11 and 10, 12) of the frame (1) and composed of a vertical section equivalent to half the thickness of the respective symmetrical side.

2. Multicombinable support frame for electrical apparatus according to the preceding Claim, characterized in that the assembly means are constituted by alternate central and end projecting means, at the top (14-15) and at the bottom (16-17), separated solely by an intermediate bearing projection (7), and in that the top central projecting means (14) and the bottom one (17) have a re-entrant part or angular embedding (20)(21a) and the top end projecting means (15) and bottom ones (16) have a re-entrant part or angular embedding (21) (20a) on the inside.

3. Multicombinable support frame for electrical apparatus according to Claim 2, characterized in that the projecting assembly means (14-15) (16-17) are alternately stepped projections (14-15) with an embedding space (19) at the top and other stepped projections (16-17) with an embedding space at the bottom (18).

4. Multicombinable support frame for electrical apparatus, which comprises assembly means according to Claims 2 and 3, characterized in that the upper projecting means (14-15), the lower projecting means (16-17) and the spaces (18-19) all have the same dimensions, both in length and in width, depth, except for the tolerances for adjustment.

5. Multicombinable support frame for electrical apparatus, which comprises upper projecting means (14-15) and stepped lower projecting means (16-17), according to any one of Claims 2 to 4, characterized in that the vertical section thereof presents an exact thickness on all the sides (9) (10) (11) and (12) of the rigid frame (1).

6. Multicombinable support frame for electrical apparatus, which comprises alternating assembly means according to any one of Claims 1 to 5, characterized in that it comprises fitting means (22) and (23) in dovetail form, respectively fittable in vertical projection and, optionally, provided on each side with chamfers or bevels (24-25) for fitting.

7. Multicombinable support frame for electrical apparatus, consisting of a frame (1) bereft of projecting angles, according to Claim 1, characterized in that the corners are concave re-entrant angles (13).

8. Multicombinable support frame for electrical apparatus, comprising in complementary manner means (7) for bearing and centering the keys or push buttons, according to Claim 1, characterized in that they are irregular poly-gonal projections emerging perpendicularly to the edge of each side of the frame (9 to 12), disposed symmetrically, as a spider.

9. Multicombinable support frame for electrical apparatus, which comprises means (6) for fixing the decorative frames, according to Claim 1, characterized in that the fixing means (6) are constituted by cylindrical studs cone-formed with reversed projection, abutting against and tangential to the edges of the concentric flange (5) of the electrical mechanism-bearing frame (2), and presenting a peripheral notch or cut (6a) near the upper base of the stud (6).
